# EUROPEAN PATENT APPLICATION

(11) **EP 4 546 654 A1**
(43) Date of publication of application: **30.04.2025**
(21) Application number: 23917306.5
(22) Date of filing: 20.12.2023
(51) Int. Cl.: H04B 1/00, H04B 1/401

(54) **ANTENNA MULTIPLEXING SYSTEM AND TERMINAL DEVICE**

(30) Priority: 20.01.2023 CN 202310125167
(71) Applicant: Huawei Technologies Co., Ltd., Shenzhen, Guangdong 518129 (CN)
(72) Inventor: XIE, Zhiyuan, Shenzhen, Guangdong 518129 (CN); WANG, Jikang, Shenzhen, Guangdong 518129 (CN); YU, Dong, Shenzhen, Guangdong 518129 (CN); HUANG, Guodong, Shenzhen, Guangdong 518129 (CN)
(74) Representative: MERH-IP Matias Erny Reichl Hoffmann Patentanwälte PartG mbB
(86) International application number: PCT/CN2023/140304
(87) International publication number: WO 2024/152839

(57) **Abstract**

This application provides an antenna multiplexing system and a terminal device. The antenna multiplexing system includes N radio frequency front-ends (10), N impedance matching networks (70), a channel selection switch (20), and an antenna (40). Operating frequency bands of the N radio frequency front-ends (10) are different, each radio frequency front-end (10) is connected to one end of the channel selection switch (20) through one impedance matching network (70), and another end of the channel selection switch (20) is connected to the antenna (40), where N is an integer greater than or equal to 2. In this application, one impedance matching network is disposed for each radio frequency front-end, so that splitting and matching of radio frequency signals on a plurality of frequency bands can be implemented, and impedance matching between each radio frequency front-end and an antenna can be optimized.

## Description

This application claims priority to Chinese Patent Application No. 202310125167.X, filed with the China National Intellectual Property Administration on January 20, 2023 and entitled "ANTENNA MULTIPLEXING SYSTEM AND TERMINAL DEVICE", which is incorporated herein by reference in its entirety.

### TECHNICAL FIELD

Embodiments of this application relate to the field of wireless communication technologies, and in particular, to an antenna multiplexing system and a terminal device.

### BACKGROUND

With continuous development of communication technologies and terminal devices such as mobile phones, the terminal devices need to support more operating frequency bands. For example, a 5G mobile phone is required to support a 5G frequency band and a plurality of frequency bands such as frequency bands of 2G, 3G, 4G, GPS, Wi-Fi, and NFC. Because internal space of the mobile phone is limited, separately disposing a dedicated antenna for each frequency band is not practical, and this is also contrary to a development concept of a light and thin mobile phone. In this case, multiplexing one antenna for a plurality of frequency bands becomes a design trend.

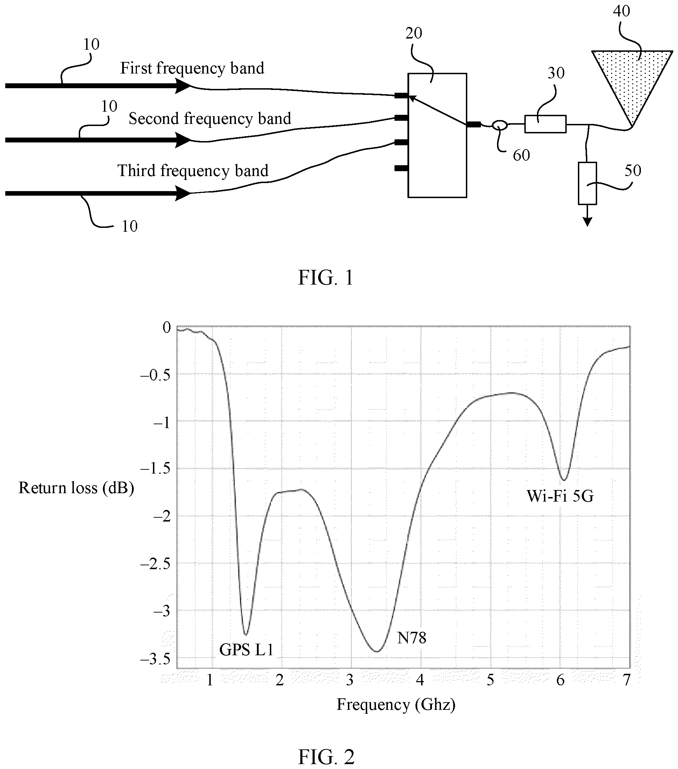

An antenna multiplexing system shown in FIG. 1 may be used to implement the solution of multiplexing one antenna for a plurality of frequency bands. A plurality of radio frequency front-ends 10 are electrically connected to an antenna 40 through a channel selection switch 20. A multi-band impedance matching network 30 is disposed between the channel selection switch 20 and the antenna 40. Impedance matching between each radio frequency front-end 10 and the antenna 40 is implemented through the multi-band impedance matching network 30, to improve transmission efficiency.

A design disadvantage of the solution is that the multi-band impedance matching network 30 is disposed between the channel selection switch 20 and the antenna 40, and is multiplexed by three radio frequency front-ends 10. The multi-band impedance matching network 30 cannot simultaneously meet matching requirements of all the radio frequency front-ends 10. Consequently, impedance matching between each radio frequency front-end 10 and the antenna 40 may not be optimized.

### SUMMARY

Embodiments of this application provide an antenna multiplexing system and a terminal device. One impedance matching network is disposed for each radio frequency front-end, so that splitting and matching of signals on a plurality of frequency bands can be implemented, and impedance matching between each radio frequency front-end and an antenna can be optimized.

According to a first aspect, an antenna multiplexing system is provided, including N radio frequency front-ends, N impedance matching networks, a channel selection switch, and an antenna, where operating frequency bands of the N radio frequency front-ends are different, each radio frequency front-end is connected to one end of the channel selection switch through one impedance matching network, and another end of the channel selection switch is connected to the antenna, where N is an integer greater than or equal to 2.

According to the antenna multiplexing system provided in this embodiment of this application, one impedance matching network is disposed between each radio frequency front-end and the channel selection switch. The impedance matching network can implement impedance matching between the radio frequency front-end and the antenna on a current channel. The N radio frequency front-ends are disposed in a one-to-one correspondence with the N impedance matching networks, so that splitting and matching on signals on a plurality of frequency bands can be implemented. In this way, difficulty in design and development is reduced, optimal impedance matching and optimal performance on all channels can be implemented. Consequentially, impedance matching between each radio frequency front-end and the antenna can be optimized, and matching requirement of all the radio frequency front-ends can be well met. In this way, the antenna can obtain high energy transmission efficiency on different frequency bands. This helps reduce energy consumption of a terminal device, prolong a battery life, and avoid a case like a communication call drop, to improve user experience of the terminal device.

Optionally, the radio frequency front-end may include one or more of components such as a radio frequency chip, a power amplifier (power amplifier, PA), a filter, a low noise amplifier (low noise amplifier, LNA), a duplexer, a radio frequency switch, a receiver/transmitter, or a matching circuit.

Optionally, the impedance matching network may be an impedance matching circuit. The impedance matching circuit may include an electronic component like a switch, a capacitor, or an inductor. For example, the impedance matching circuit may be any one of a T-shaped circuit, a π-shaped circuit, or an L-shaped circuit.

Optionally, one end of the impedance matching network may be connected to a link between the radio frequency front-end and the channel selection switch, and another end is grounded.

In a possible design, the antenna multiplexing system further includes a multi-band impedance matching network disposed between the channel selection switch and the antenna.

The multi-band impedance matching network is disposed on a link that the plurality of radio frequency front-ends all pass through, and the respective impedance matching network are combined. This can improve flexibility of impedance matching, and helps reduce difficulty in design and development.

In a possible design, one of the impedance matching networks is disposed between the channel selection switch and the antenna.

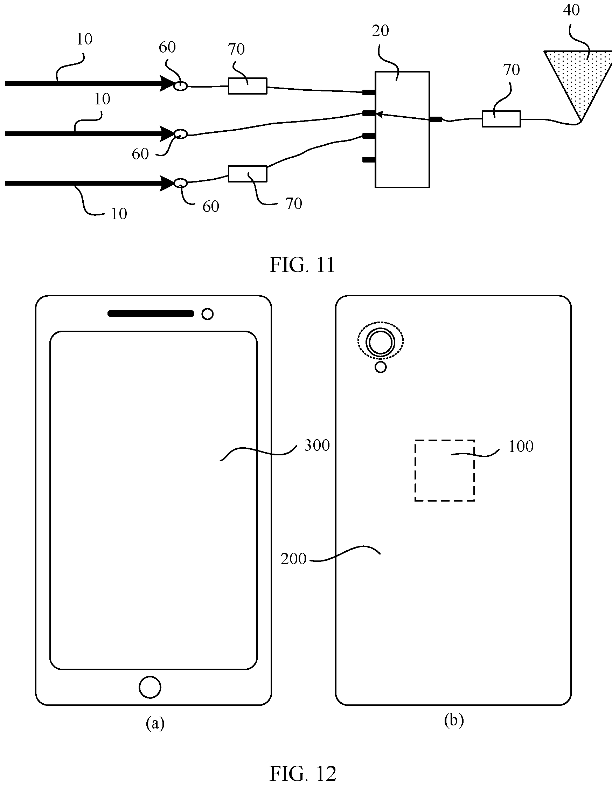

Equivalent to an alternative solution of the foregoing embodiment, in this embodiment (corresponding to FIG. 11), one of the impedance matching networks is disposed between the channel selection switch and the antenna, that is, the impedance matching network is moved from an original location between the radio frequency front-end and the channel selection switch to a location between the channel selection switch and the antenna. In this case, the impedance matching network participates in impedance matching between on an original channel of the impedance matching network, and needs to participate in impedance matching on another channel.

In a possible design, the channel selection switch is a single-pole M-throw switch, the single-pole M-throw switch includes a control end and M connection ends, the control end is connected to the antenna, and each radio frequency front-end is connected to one of the connection ends, where M is an integer greater than or equal to N.

Optionally, the antenna multiplexing system includes three radio frequency front-ends, and the channel selection switch may be a single-pole four-throw (single-pole four-throw, SP4T) switch. In this case, the channel selection switch has four connection ends in total, the three radio frequency front-ends each may be connected to one of the connection ends, and one connection end is surplus.

Optionally, in another implementation, the channel selection switch may include N single-pole one-throw switches, one end of each single-pole one-throw switch is connected to one radio frequency front end, and another end of the single-pole one-throw switch is connected to the antenna. For example, the three radio frequency front-ends may be connected to or disconnected from the antenna through three single-pole one-throw switches.

In a possible design, a radio frequency test base is disposed between each radio frequency front-end and the corresponding impedance matching network.

The radio frequency test base is disposed at the foregoing location, so that a test instrument can be connected through the radio frequency test base, to measure and debug a related parameter of impedance matching of the antenna.

In a possible design, the antenna multiplexing system further includes an aperture switch connected between the channel selection switch and the antenna.

In a possible design, the operating frequency band of the radio frequency front-end is any one of a 2G frequency band, a 3G frequency band, a 4G frequency band, a 5G frequency band, a GPS frequency band, a Wi-Fi frequency band, or an NFC frequency band.

For example, the operating frequency band of the radio frequency front-end is specifically a 3G B1, B2, B4, B5, B6, B8, or B19 frequency band, or may be a 4G B1, B2, B3, B4, B5, B7, B8, B12, B17, B18, B19, B20, B26, B28A, B34, B38, B39, B40, B41, or B42 frequency band, or may be a 5G N1, N3, N28A, N41, N77, N78, or N79 frequency band, or may be a GPS L1 frequency band, or may be a Wi-Fi 2.4G or 5G frequency band.

In a possible design, the antenna is a monopole antenna, a PIFA antenna, an IFA antenna, a left-hand antenna, an Alpha antenna, a support-type antenna, or an attachment-type antenna.

In a possible design, N is 3, and operating frequency bands of three radio frequency front-ends are respectively a GPS L1 frequency band, a 5G N78 frequency band, and a Wi-Fi 5G frequency band.

According to a second aspect, a terminal device is provided, including a housing and the antenna multiplexing system according to any one of the possible designs that is disposed in the housing.

Optionally, the terminal device may be any electronic device having a wireless communication function. For example, the terminal device provided in this embodiment of this application may be a mobile phone, a router, a tablet computer, a notebook computer, a television, a smart speaker, a vehicle-mounted device, a wearable device (watch or band), an industrial device, an artificial intelligence device, an augmented reality (augmented reality, AR) device, or a virtual reality (virtual reality, VR) device, but is not limited thereto.

Because the terminal device uses the antenna multiplexing system according to the first aspect, the terminal device also has technical effect corresponding to the antenna multiplexing system. Details are not described herein again.

### BRIEF DESCRIPTION OF DRAWINGS

FIG. 1 is a diagram of a structure of an antenna multiplexing system in a related technology;
FIG. 2 is a curve diagram of a return loss of the antenna multiplexing system shown in FIG. 1;
FIG. 3 is a diagram of a structure of an example of an antenna multiplexing system according to an embodiment of this application;
FIG. 4 is a comparison diagram of return loss curves of a GPS L1 frequency band before and after an impedance matching network is introduced;
FIG. 5 is a smith chart of comparison between impedance characteristics of a GPS L1 frequency band before and after an impedance matching network is introduced;
FIG. 6 is a comparison diagram of return loss curves of a 5G N78 frequency band before and after an impedance matching network is introduced;
FIG. 7 is a smith chart of comparison between impedance characteristics of a 5G N78 frequency band before and after an impedance matching network is introduced;
FIG. 8 is a comparison diagram of return loss curves of a Wi-Fi 5G frequency band before and after an impedance matching network is introduced;
FIG. 9 is a smith chart of comparison between impedance characteristics of a Wi-Fi 5G frequency band before and after an impedance matching network is introduced;
FIG. 10 is a diagram of a structure of another example of an antenna multiplexing system according to an embodiment of this application;
FIG. 11 is a diagram of a structure of still another example of an antenna multiplexing system according to an embodiment of this application; and
FIG. 12 is a diagram of a structure of a terminal device according to an embodiment of this application.

Reference numerals:
10: radio frequency front-end; 20: channel selection switch; 30: multi-band impedance matching network; 40: antenna; 50: aperture switch; 60: radio frequency test base; 70: impedance matching network;
100: antenna multiplexing system;
200: housing; and
300: display.

### DESCRIPTION OF EMBODIMENTS

The following describes implementations of this application in detail. Examples of the implementations are shown in the accompanying drawings. Same or similar reference signs are always used to represent same or similar elements or elements having same or similar functions. The implementations described below with reference to the accompanying drawings are examples, and are merely used to explain this application, but cannot be understood as a limitation on this application.

It should be understood that, the terms "first" and "second" in descriptions of this application are merely intended for a purpose of description, and shall not be understood as an indication or implication of relative importance or implicit indication of a quantity of indicated technical features. Therefore, a feature limited by "first" or "second" may explicitly or implicitly include one or more of the features. In the descriptions of this application, "a plurality of" means two or more, unless otherwise specifically limited.

In the descriptions of this application, it should be noted that, unless otherwise explicitly specified and limited, the terms "mounting" and "connection" should be understood in a broad sense, for example, may be a fixed connection, a detachable connection, or an integrated connection; or may be a mechanical connection or an electrical connection, or may mean mutual communication; or may be a direct connection, or an indirect connection through an intermediate medium, or may be a connection inside two elements or an interaction relationship between two elements. A person of ordinary skill in the art may understand specific meanings of the foregoing terms in this application in specific cases.

In the description of this application, it should be understood that orientation or location relationships indicated by terms "above", "below", "side", "front", "back", and the like are based on orientation or location relationships of mounting, and are merely intended for ease of describing this application and simplifying the descriptions, but are not intended to indicate or imply that a specified apparatus or element needs to have a specific orientation or be constructed and operated in a specific orientation. Therefore, this cannot be understood as a limitation on this application.

It should be further noted that in embodiments of this application, a same reference numeral indicates a same component or a same part. For a same part in embodiments of this application, only one part or component may be used as an example to mark a reference numeral in the figure. It should be understood that, for another same part or component, reference numerals are also applicable.

With continuous development of communication technologies and an increasingly high usage requirement of a user for terminal devices such as mobile phones, the terminal devices need to support more operating frequency bands (standards). For example, a 5G mobile phone is required to support a 5G frequency band, and a plurality of frequency bands such as frequency bands of 2G, 3G, 4G, global positioning system (global positioning system, GPS), wireless fidelity (wireless fidelity, Wi-Fi), and near field communication (near field communication, NFC). Because internal space of the mobile phone is limited, deploying more (specifications of) antennas and separately disposing a dedicated antenna for each frequency band are impossible and not practical, and these are also contrary to a development concept of a light and thin mobile phone. In this case, multiplexing one antenna for a plurality of frequency bands becomes a design trend.

An antenna multiplexing system shown in FIG. 1 may be used to implement the solution of multiplexing one antenna for a plurality of frequency bands. FIG. 1 is a diagram of a structure of an antenna multiplexing system in a related technology. As shown in FIG. 1, three radio frequency front-ends 10 are all connected to an antenna 40 through a channel selection switch 20 and a multi-band impedance matching network 30. The three radio frequency front-ends 10 are respectively configured to send radio frequency signals on a first frequency band, a second frequency band, and a third frequency band to the antenna 40. One of the radio frequency signals on the three different frequency bands may be selected to enter the multi-band impedance matching network 30 through switching of the channel selection switch 20, and then fed into the antenna 40. Correspondingly, one radio frequency signal sent by the antenna 40 may also be selected and sent, through switching of the channel selection switch 20, to a radio frequency front-end 10 of a corresponding frequency band.

When a terminal device transmits a radio frequency signal through the antenna 40, to efficiently transmit the radio frequency signal from the radio frequency front-end 10 to the antenna 40 or efficiently transmit the radio frequency signal from the antenna 40 to the radio frequency front-end 10, it needs to be ensured that impedances of the radio frequency front-end 10 and the antenna 40 match each other (that is, the impedances of the radio frequency front-end 10 and the antenna 40 are conjugated). Once impedance mismatching occurs between the radio frequency front-end 10 and the antenna 40, a standing wave may be formed, and consequently, transmission efficiency of the antenna 40 is significantly reduced. Specifically, power consumption of the terminal device is increased, a battery life is shortened, a communication call drop occurs, and the like, resulting in poor user experience.

As shown in FIG. 1, the multi-band impedance matching network 30 is added between the radio frequency front-end 10 and the antenna 40, so that impedance matching (impedance matching) between the radio frequency front-end 10 and the antenna 40 can be implemented. Specifically, the multi-band impedance matching network 30 is disposed between the channel selection switch 20 and the antenna 40, and a parameter of the multi-band impedance matching network 30 is adjusted, to change a transmission characteristic of a radio frequency signal on a transmit channel from each radio frequency front-end 10 to the antenna 40, or change a transmission characteristic of a radio frequency signal on a receive channel from the receiving antenna 40 to each radio frequency front-end 10, so as to implement impedance matching between the radio frequency front-end 10 and the antenna 40, that is, implement non-reflective transmission of the radio frequency signal. In this way, transmission efficiency is improved.

In the antenna multiplexing system shown in FIG. 1, the multi-band impedance matching network 30 is disposed between the channel selection switch 20 and the antenna 40, and is multiplexed by the three radio frequency front-ends 10. To be specific, the multi-band impedance matching network 30 is configured to implement impedance matching between the antenna 40 and any one of the three radio frequency front-ends 10. This is difficult to implement, cannot achieve optimal effect, and cannot simultaneously meet matching requirements of all the radio frequency front-ends 10. As a result, impedance matching on the channel between each radio frequency front-end 10 and the antenna 40 cannot be optimized.

In a specific example, one of the radio frequency front-ends 10 includes a GPS chip, configured to transmit a radio frequency signal on a GPS L1 frequency band (that is, the first frequency band in FIG. 1 is the GPS L1 frequency band), the 2^{nd} radio frequency front-end 10 includes a 5G chip, configured to transmit a radio frequency signal on a 5G N78 frequency band (that is, the second frequency band in FIG. 1 is the 5G N78 frequency band), and the 3^{rd} radio frequency front-end 10 includes a Wi-Fi chip, configured to transmit a radio frequency signal on a Wi-Fi 5G frequency band (that is, the third frequency band in FIG. 1 is the Wi-Fi 5G frequency band). Through the multi-band impedance matching network 30, impedance matching is separately performed on the antenna 40 on the three frequency bands. For corresponding matching effect, refer to FIG. 2. FIG. 2 is a curve diagram of a return loss of the antenna multiplexing system shown in FIG. 1.

Return loss (ReturnLoss): The return loss is also referred to as a reflection loss and is a parameter indicating signal reflection performance. A return loss indicates that a part of incident power is reflected back to a signal source. Generally, reflected power is required to be as small as possible, so that more power is transmitted to a load. The return loss is a ratio of the incident power to the reflected power of a transmission line port, and is expressed in a logarithmic absolute value in dB. In actual application, radio waves are expected to be transmitted in full waves, and no echo is expected. In other words, a greater return loss absolute value is expected. The larger the value is, the smaller the reflected power is, and the better the matching is.

It can be learned from FIG. 2 that return loss absolute values corresponding to the three frequency bands: the GPS L1 frequency band, the 5G N78 frequency band, and the Wi-Fi 5G frequency band are between 1.5 to 3.5, and the values are small and close to 0. This indicates that matching effect between each radio frequency front-end 10 and the antenna 40 is common (that is, impedance mismatching). Consequently, the transmission efficiency of the antenna 40 on different frequency bands is poor. In this case, the power consumption of the terminal device is increased, the battery life is shortened, the communication call drop occurs, and this affects user experience.

For the foregoing problems, embodiments of this application first provide an antenna multiplexing system. In the antenna multiplexing system, one impedance matching network is disposed for each radio frequency front-end, so that splitting and matching on signals on a plurality of frequency bands can be implemented, and optimal matching and optimal performance on all channels is implemented. Consequentially, impedance matching between each radio frequency front-end and the antenna can be optimized. Therefore, the antenna can obtain high transmission efficiency on different frequency bands, and user experience of the terminal device can be improved.

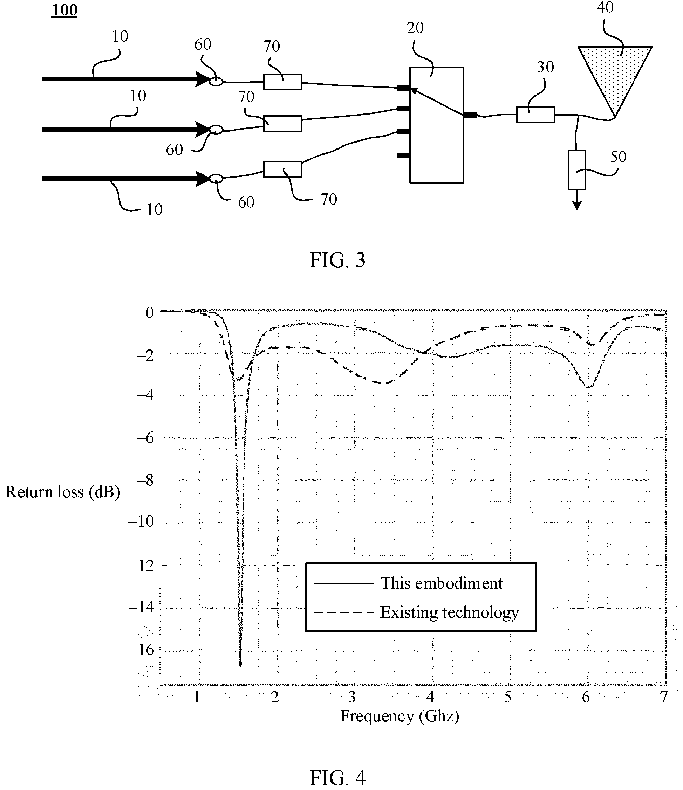

FIG. 3 is a diagram of a structure of an example of an antenna multiplexing system 100 according to an embodiment of this application. As shown in FIG. 3, the antenna multiplexing system 100 includes N radio frequency front-ends 10, N impedance matching networks 70, a channel selection switch 20, and an antenna 40. Operating frequency bands of the N radio frequency front-ends 10 are different. Each radio frequency front-end 10 is connected to one end of the channel selection switch 20 through one impedance matching network 70, and another end of the channel selection switch 20 is connected to the antenna 40. Herein, N is an integer greater than or equal to 2, for example, N may be three, as shown in FIG. 3. In addition, N may be four, five, or six.

The radio frequency front-end (radio frequency front-end, RFFE) 10 is a core component of a wireless communication module, and is configured to: send a radio frequency signal to the antenna 40 and receive a radio frequency signal from the antenna 40. The radio frequency front-end 10 may include one or more of components such as a radio frequency chip, a power amplifier (power amplifier, PA), a filter, a low noise amplifier (low noise amplifier, LNA), a duplexer, a radio frequency switch, a receiver/transmitter, or a matching circuit.

The N radio frequency front-ends 10 have different operating frequency bands, and are all connected to the antenna 40 through the channel selection switch 20, to implement "multifrequency multiplexing" of the antenna. Herein, the operating frequency band of the radio frequency front-end 10 means a frequency band range to which the radio frequency signals sent and received by the radio frequency front-end 10 belong. For example, the operating frequency band of the radio frequency front-end 10 may be any one of a 2G frequency band, a 3G frequency band, a 4G frequency band, a 5G frequency band, a GPS frequency band, a Wi-Fi frequency band, or an NFC frequency band.

For example, the operating frequency band of the radio frequency front-end 10 is specifically a 3G B1, B2, B4, B5, B6, B8, or B19 frequency band, or may be a 4G B1, B2, B3, B4, B5, B7, B8, B12, B17, B18, B19, B20, B26, B28A, B34, B38, B39, B40, B41, or B42 frequency band, or may be a 5G N1, N3, N28A, N41, N77, N78, or N79 frequency band, or may be a GPS L1 frequency band, or may be a Wi-Fi 2.4G or 5G frequency band.

The one end (for example, a left end in FIG. 3) of the channel selection switch 20 is connected to the plurality of radio frequency front-ends 10, and the another end is connected to the antenna 40. Through switching of the channel selection switch 20, one of the radio frequency front-ends 10 can be electrically connected to the antenna 40.

In a possible implementation, the channel selection switch 20 may be a single-pole M-throw switch, where the single-pole M-throw switch includes a control end and M connection ends, the control end is connected to the antenna 40, and each radio frequency front-end 10 is connected to one of the connection ends, where M is an integer greater than or equal to N, to ensure that each radio frequency front-end 10 can be independently connected to one connection end (a connection end may be surplus). The control end can be electrically connected to any connection end, and can be switched between different connection ends, so that the antenna 40 can be electrically connected to any one of the radio frequency front ends 10.

As shown in FIG. 3, the antenna multiplexing system 100 includes three radio frequency front-ends 10, and the channel selection switch 20 may be a single-pole four-throw (single-pole four-throw, SP4T) switch. In this case, the channel selection switch 20 has four connection ends in total, the three radio frequency front-ends 10 each may be connected to one of the connection ends, and one connection end is surplus.

Optionally, in another implementation, the channel selection switch 20 may include N single-pole one-throw switches, one end of each single-pole one-throw switch is connected to one radio frequency front end 10, and another end of the single-pole one-throw switch is connected to the antenna 40. For example, the three radio frequency front-ends 10 may be connected to or disconnected from the antenna 40 through three single-pole one-throw switches.

The impedance matching network 70 is connected between the radio frequency front-end 10 and the antenna 40, and is configured to implement impedance matching between the radio frequency front-end 10 and the antenna 40 on a current channel. For example, the impedance matching network 70 on the uppermost side in FIG. 3 is configured to implement impedance matching between the radio frequency front-end 10 on the uppermost side and the antenna 40, the impedance matching network 70 in the middle in FIG. 3 is configured to implement impedance matching between the radio frequency front-end 10 in the middle and the antenna 40, and the impedance matching network 70 on the lowermost side in FIG. 3 is configured to implement impedance matching between the radio frequency front-end 10 on the lowermost side and the antenna 40.

Optionally, the impedance matching network 70 may be an impedance matching circuit. The impedance matching circuit may include an electronic component like a switch, a capacitor, or an inductor. For example, the impedance matching circuit may be any one of a T-shaped circuit, a π-shaped circuit, or an L-shaped circuit.

Optionally, one end of the impedance matching network 70 may be connected to a link between the radio frequency front-end 10 and the channel selection switch 20, and another end is grounded.

Further, as shown in FIG. 3, each radio frequency front-end 10 is connected to the one end of the channel selection switch 20 through one impedance matching network 70, that is, the impedance matching network 70 is disposed between the radio frequency front-end 10 and the channel selection switch 20, instead of being disposed between the channel selection switch 20 and the antenna 40. In this way, while the impedance matching network 70 implements impedance matching between the radio frequency front-end 10 and the antenna 40 on the current channel, impedance matching on another channel may not be affected.

The antenna 40 is configured to convert the radio frequency signal from the radio frequency front-end 10 into an electromagnetic wave propagated in free space, or convert a received electromagnetic wave into a radio frequency signal and send the radio frequency signal to the radio frequency front-end 10. For example, the antenna 40 may be any one of a monopole antenna, a planar inverted F-shaped antenna (planar inverted F-shaped antenna, PIFA), an inverted F-shaped antenna (inverted F-shaped antenna, IFA), a left-hand antenna, an Alpha antenna, a support-type antenna, or an attachment-type antenna.

According to the antenna multiplexing system 100 provided in this embodiment of this application, one impedance matching network 70 is disposed between each radio frequency front-end 10 and the channel selection switch 20. The impedance matching network 70 can implement impedance matching between the radio frequency front-end 10 and the antenna 40 on the current channel. The N radio frequency front-ends 10 are disposed in a one-to-one correspondence with the N impedance matching networks 70, so that splitting and matching on signals on a plurality of frequency bands can be implemented. In this way, difficulty in design and development is reduced, optimal impedance matching and optimal performance on all channels can be implemented. Consequentially, impedance matching between each radio frequency front-end 10 and the antenna 40 can be optimized, and matching requirement of all the radio frequency front-ends 10 can be well met. In this way, the antenna 40 can obtain high energy transmission efficiency on different frequency bands. This helps reduce energy consumption of a terminal device, prolong a battery life, and avoid a case like a communication call drop, to improve user experience of the terminal device.

As shown in FIG. 3, the antenna multiplexing system 100 provided in this embodiment of this application further includes a multi-band impedance matching network 30 between the channel selection switch 20 and the antenna 40. The multi-band impedance matching network 30 is disposed on a link that the plurality of radio frequency front-ends 10 all pass through, and the respective impedance matching network 70 are combined. This can improve flexibility of impedance matching, and helps reduce difficulty in design and development.

As shown in FIG. 3, the antenna multiplexing system 100 provided in this embodiment of this application further includes an aperture switch 50 connected between the channel selection switch 20 and the antenna 40 (for example, may be connected between the multi-band impedance matching network 30 and the antenna 40). The aperture switch 50 can be configured to perform aperture tuning, so that impedance matching can be more flexible.

As shown in FIG. 3, the antenna multiplexing system 100 provided in this embodiment of this application further includes N radio frequency test bases 60, that is, one radio frequency test base 60 is disposed between each radio frequency front-end 10 and the corresponding impedance matching network 70. Compared with the radio frequency test base 60 in FIG. 1, the radio frequency test base 60 in this embodiment is moved towards the left side in the figure, that is, moved from a location on the original right side of the channel selection switch 20 to a location that is on the left side of the channel selection switch 20 and that is located between the radio frequency front-end 10 and the impedance matching network 70. The radio frequency test base 60 is disposed at the foregoing location, so that a test instrument can be connected through the radio frequency test base 60, to measure and debug a related parameter of impedance matching of the antenna 40.

In comparison with the antenna multiplexing system shown in FIG. 1, in the antenna multiplexing system 100 provided in this embodiment, one impedance matching network 70 is disposed on each channel on the left side of the channel selection switch 20 in the figure. Solution comparison may be performed. For example, impedance matching effect of this embodiment may be better represented by comparing return loss curves and a smith chart (smith chart) of impedance characteristics. In a specific example, the antenna multiplexing system 100 includes three radio frequency front-ends 10, and operating frequency bands of the three radio frequency front-ends 10 may be respectively a GPS L1 frequency band, a 5G N78 frequency band, and a Wi-Fi 5G frequency band.

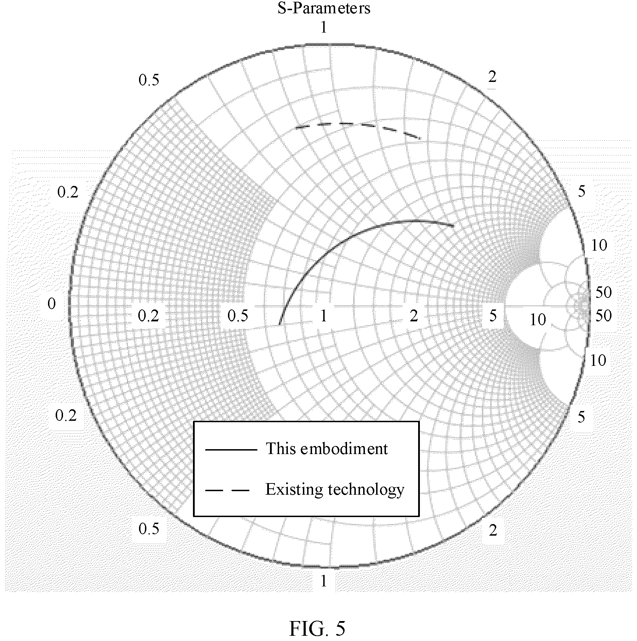

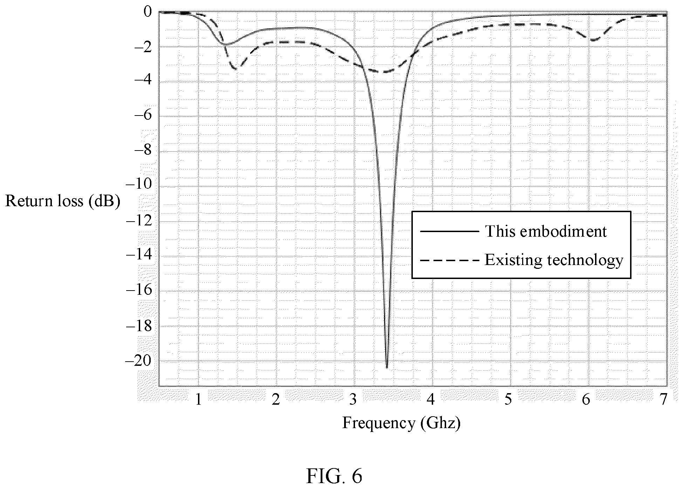

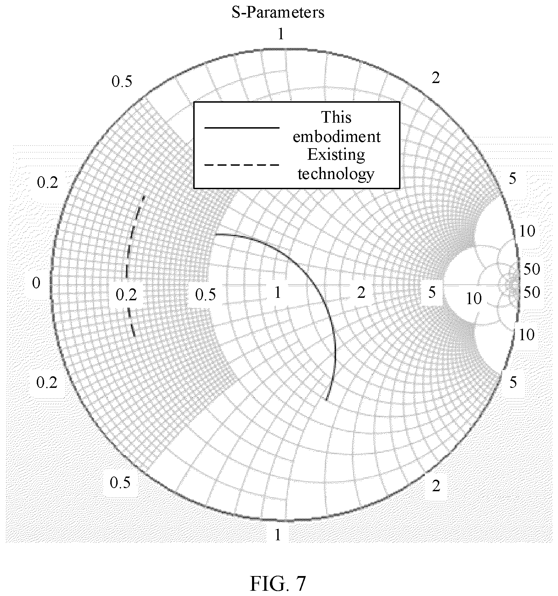

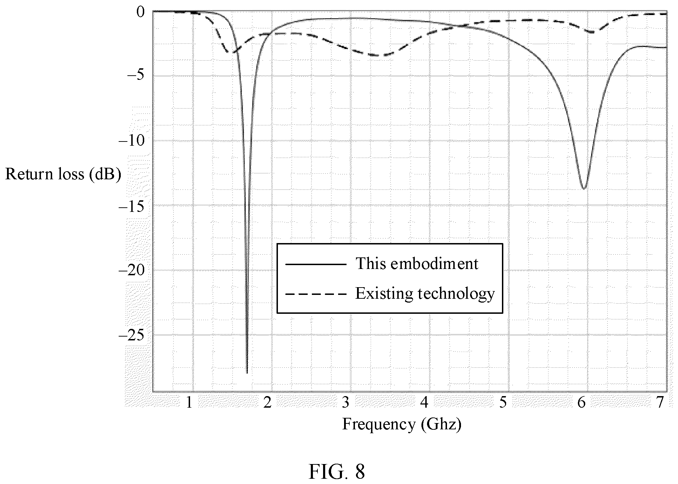

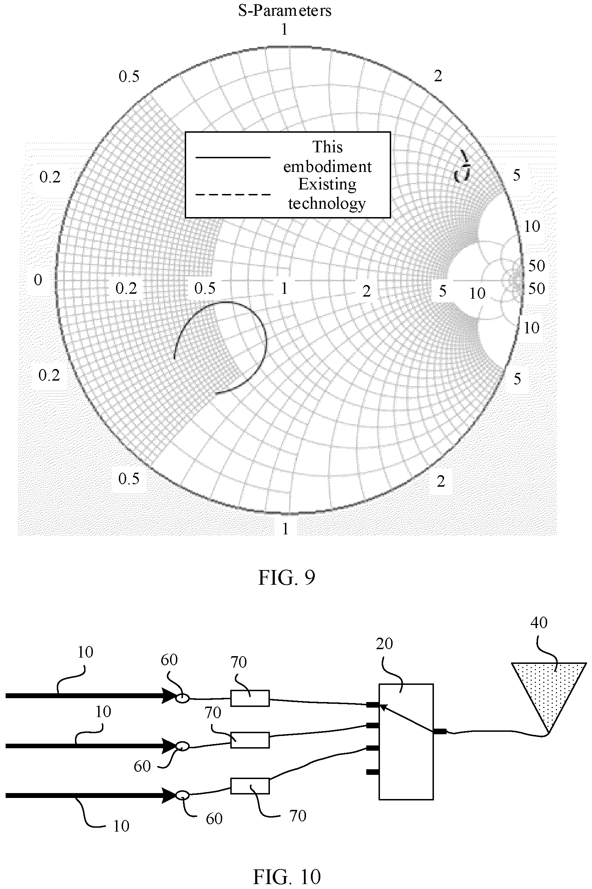

FIG. 4 is a comparison diagram of return loss curves of a GPS L1 frequency band before and after an impedance matching network is introduced. FIG. 5 is a smith chart of comparison between impedance characteristics of a GPS L1 frequency band before and after an impedance matching network is introduced. FIG. 6 is a comparison diagram of return loss curves of a 5G N78 frequency band before and after an impedance matching network is introduced. FIG. 7 is a smith chart of comparison between impedance characteristics of a 5G N78 frequency band before and after an impedance matching network is introduced. FIG. 8 is a comparison diagram of return loss curves of a Wi-Fi 5G frequency band before and after an impedance matching network is introduced. FIG. 9 is a smith chart of comparison between impedance characteristics of a Wi-Fi 5G frequency band before and after an impedance matching network is introduced.

As shown in FIG. 4 to FIG. 9, in comparison with the antenna multiplexing system shown in FIG. 1, in the antenna multiplexing system 100 provided in embodiments of this application, on the three frequency bands: the GPS L1 frequency band, the 5G N78 frequency band, and the Wi-Fi 5G frequency band, an impedance characteristic of the antenna 40 is significantly improved, an impedance matching degree is higher, reflected power is smaller, and energy transmission efficiency is greatly improved. This further verifies that in this application, splitting and matching on signals on a plurality of frequency bands are implemented, so that optimal matching and optimal performance on all channels can be implemented, and impedance matching between each radio frequency front end 10 and the antenna 40 can be optimized.

FIG. 10 is a diagram of a structure of another example of an antenna multiplexing system 100 according to an embodiment of this application. As shown in FIG. 10, in comparison with the embodiment shown in FIG. 3, in this embodiment, no multi-band impedance matching network 30 is disposed, and the channel selection switch 20 is directly connected to the antenna 40. In this case, on each channel, impedance matching between the radio frequency front-end 10 and the antenna 40 is implemented only through the matching network 70 on the channel. This helps save implementation costs.

FIG. 11 is a diagram of a structure of still another example of an antenna multiplexing system 100 according to an embodiment of this application. As shown in FIG. 11, in comparison with the embodiment shown in FIG. 10, in this embodiment, one of the impedance matching networks 70 is disposed between the channel selection switch 20 and the antenna 40, that is, the impedance matching network 70 is moved from an original location between the radio frequency front-end 10 and the channel selection switch 20 to a location between the channel selection switch 20 and the antenna 40. In this case, the impedance matching network 70 participates in impedance matching on an original channel of the impedance matching network 70, and needs to participate in impedance matching on another channel (in this case, the impedance matching network 70 is equivalent to a multi-band impedance matching network).

In addition, embodiments of this application further provide a terminal device. FIG. 12 is a diagram of a structure of a terminal device according to an embodiment of this application. (a) and (b) in FIG. 12 are respectively a front view and a rear view of the terminal device. As shown in FIG. 12, the electronic device provided in this embodiment of this application includes the antenna multiplexing system 100 provided in any one of the foregoing embodiments.

In addition, the terminal device further includes a housing 200 and a display 300. The display 300 is mounted to the housing 200, and accommodation space is formed in the housing 200. The antenna multiplexing system 100 may be mounted in the accommodation space. The display 300 is electrically connected to a processor, and a picture or a video processed by the processor can be displayed on the display 300.

Optionally, the display 300 may be a light emitting diode (light emitting diode, LED) display, a liquid crystal display (liquid crystal display, LCD), an organic light-emitting diode (organic light-emitting diode, OLED) display, or the like, but is not limited thereto.

Optionally, the housing 200 may further include another component like a battery, a flash, a fingerprint recognition module, an earpiece, a circuit board, and a sensor, but is not limited thereto.

Optionally, the terminal device may be any electronic device having a wireless communication function. For example, the terminal device provided in this embodiment of this application may be a mobile phone, a router, a tablet computer, a notebook computer, a television, a smart speaker, a vehicle-mounted device, a wearable device (watch or band), an industrial device, an artificial intelligence device, an augmented reality (augmented reality, AR) device, or a virtual reality (virtual reality, VR) device, but is not limited thereto.

Because the terminal device uses the antenna multiplexing system 100 provided in the foregoing embodiment, the terminal device also has technical effect corresponding to the antenna multiplexing system 100. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An antenna multiplexing system, comprising N radio frequency front-ends (10), N impedance matching networks (70), a channel selection switch (20), and an antenna (40), wherein operating frequency bands of the N radio frequency front-ends (10) are different, each radio frequency front-end (10) is connected to one end of the channel selection switch (20) through one impedance matching network (70), and another end of the channel selection switch (20) is connected to the antenna (40), wherein N is an integer greater than or equal to 2.

2. The antenna multiplexing system according to claim 1, wherein the antenna multiplexing system further comprises a multi-band impedance matching network (30) disposed between the channel selection switch (20) and the antenna (40).

3. The antenna multiplexing system according to claim 1, wherein one of the impedance matching networks (70) is disposed between the channel selection switch (20) and the antenna (40).

4. The antenna multiplexing system according to any one of claims 1 to 3, wherein the channel selection switch (20) is a single-pole M-throw switch, the single-pole M-throw switch comprises a control end and M connection ends, the control end is connected to the antenna (40), and each radio frequency front-end (10) is connected to one of the connection ends, wherein M is an integer greater than or equal to N.

5. The antenna multiplexing system according to any one of claims 1 to 4, wherein a radio frequency test base (60) is disposed between each radio frequency front-end (10) and the corresponding impedance matching network (70).

6. The antenna multiplexing system according to any one of claims 1 to 5, wherein the antenna multiplexing system further comprises an aperture switch (50) connected between the channel selection switch (20) and the antenna (40).

7. The antenna multiplexing system according to any one of claims 1 to 6, wherein the operating frequency band of the radio frequency front-end (10) is any one of a 2G frequency band, a 3G frequency band, a 4G frequency band, a 5G frequency band, a GPS frequency band, a Wi-Fi frequency band, or an NFC frequency band.

8. The antenna multiplexing system according to any one of claims 1 to 7, wherein the antenna (40) is a monopole antenna, a PIFA antenna, an IFA antenna, a left-hand antenna, an Alpha antenna, a support-type antenna, or an attachment-type antenna.

9. The antenna multiplexing system according to any one of claims 1 to 8, wherein N is 3, and operating frequency bands of three radio frequency front-ends (10) are respectively a GPS L1 frequency band, a 5G N78 frequency band, and a Wi-Fi 5G frequency band.

10. A terminal device, comprising a housing (200) and the antenna multiplexing system according to any one of claims 1 to 9 that is disposed in the housing (200).
